# EUROPEAN PATENT APPLICATION

(11) **EP 2 302 763 A1**
(43) Date of publication of application: **30.03.2011**
(21) Application number: 10173093.5
(22) Date of filing: 17.08.2010
(51) Int. Cl.: H02K 5/08, H02K 7/10, E06B 9/72

(54) **Motorized device for controlling roller curtains, shutters or mosquito nets**

(30) Priority: 23.09.2009 IT PN20090053
(71) Applicant: Dec Elettronica S.r.l., 31040 Fossalta Maggiore di Chiaran (TV) (IT)
(72) Inventor: Vendramin, Gianmarco, 31040, Fossalta Maggiore di Chiarano (TV (IT)
(74) Representative: Giugni, Valter

(57) **Abstract**

The present invention refers to a motorized device (1) for controlling roller curtains, shutters or mosquito nets, including a tubular gearmotor (8) extending along a longitudinal axis (X-X), a housing (4) for said gearmotor, a winding tube upon which a rolling curtain, shutter or mosquito net is wound or unwound, and a set of electrical/electronic components (11) used to drive and control the gearmotor, **characterized in that** said housing (4) is provided with apertures (45) appropriate to accommodate said gearmotor (8) so that its external surface is coplanar with the external surface of said housing.

## Description

### TECHNICAL FIELD OF INVENTION

The present invention refers to a motorized device for controlling roller curtains, shutters or mosquito nets and, in particular, to a housing of compact dimensions for a motor driving said device.

### BACKGROUND OF INVENTION

Motorized devices for controlling roller curtains, shutters or mosquito nets have been known for a long time and generally comprise a tubular gearmotor, a housing for said gearmotor, a winding tube upon which a rolling curtain, shutter or mosquito net is wound or unwound and a set of electrical/electronic components used to drive and control the gearmotor.

The above-mentioned elements making up the device are usually housed in a shell positioned in the upper part of a frame suitable to guide a curtain, a shutter or a mosquito net and applied to a window, a terrace, a balcony or a veranda on a building. This shell may be of large or small size depending on the power, and therefore the dimensions, of the tubular gearmotor housed therein. The tubular gearmotor itself installed on the device depends on the type and particularly the size of the rolling curtains, shutters or mosquito nets to be opened or closed.

Consequently, particularly in cases in which the size of the curtains, shutters or mosquito nets is important, the tubular gearmotors must necessarily also be of suitable size to drive them without encountering problems of jamming, slowing down or malfunctions in general. Obviously, such gearmotors imply dimensions that require larger and bulkier external shells that are sometimes difficult to install when the spaces available are limited.

### SUMMARY OF THE INVENTION

The technical problem underlying the present invention is thus to devise a motorized device designed to drive roller curtains, shutters or mosquito nets that is capable of limiting as much as possible the overall dimensions without diminishing the power of the same device, and therefore its efficiency in winding and unwinding rolling curtains, shutters or mosquito nets.

This problem is resolved by a motorized device for controlling roller curtains, shutters or mosquito nets provided with structural characteristics such as to limit the dimensions of the gearmotor housing without having to use an undersize gearmotor of unsuitable power.

### BRIEF DESCRIPTION OF DRAWINGS

The objective of the present invention is therefore to provide a motorized device for controlling roller curtains, shutters or mosquito nets as covered by the enclosed claims.

Further characteristics and advantages of the present invention will become more evident from the following description of an embodiment given by way of nonlimiting example with reference to the enclosed drawings, in which:
- Figure 1 is an axonometric view of an assembly of the motorized device for controlling rolling curtains, shutters or mosquito nets and of a frame for said curtains, shutters or mosquito nets according to the present invention;
- Figure 2 is an axonometric view of a tubular gearmotor housing with a winding tube fitted on it according to the invention;
- Figure 3 is an axonometric view of a housing with a corresponding gearmotor assembled according to the invention;
- Figure 4 is an axonometric exploded view of the housing and the gearmotor of Figure 3;
- Figure 5 is an axonometric view of a detail of the exploded view of Figure 4.

### DETAILED DESCRIPTION OF THE INVENTION

The underlying idea of the present invention sprang from the observation that the real dimensions of tubular motors are determined by the reciprocal position of the rotor and stator, which are coupled to each other so as to interact electromagnetically. Consequently, a housing of compact size was devised for said tubular motor, while taking into consideration the dimensions required for the rotor and stator and, therefore, without being forced to select a less powerful motor due to the smaller dimensions.

For this purpose, a housing was prearranged equipped with apertures suitable to accommodate a part of the gearmotor. In other words, the external surface of the housing is coplanar with the external surface of the gearmotor.

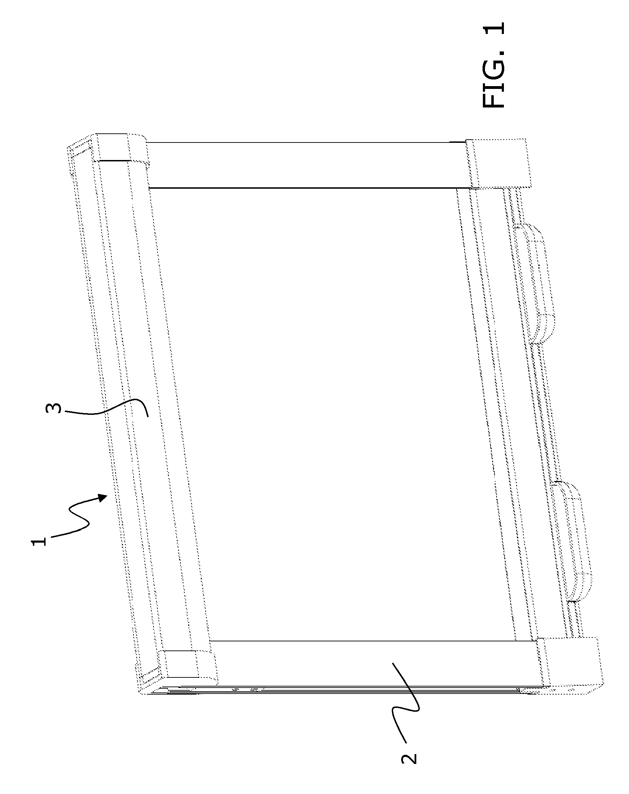

With reference to Figure 1, a motorized device for controlling roller curtains, shutters or mosquito nets is generally indicated with reference number 1. The device 1 is then coupled to a frame 2 suitable to guide curtains, shutters or mosquito nets. In particular, the device 1 includes a shell 3 suitable to enclose all its functional components, that is the electrical/electronic and mechanical components, as well as the curtain, shutter or mosquito net wound on a relevant winding tube.

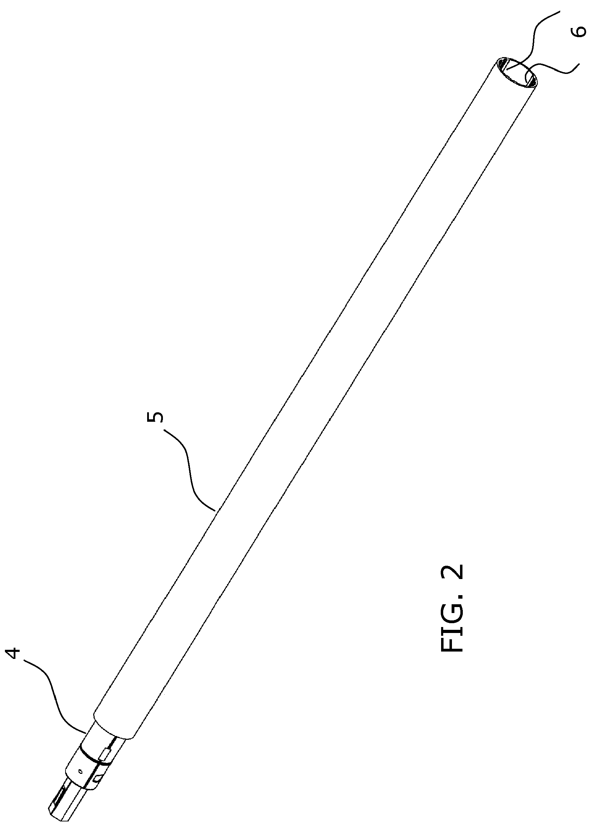

Figure 2 shows the components contained in said shell 3, that is the gearmotor housing 4 on which is partially fitted the winding tube 5 for the curtains, shutters or mosquito nets. The winding tube 5 is a fully conventional hollow cylindrical element having an external surface being engaged by a curtain, a rolling shutter or mosquito net (not shown); in other words, the tube works as a support on which said curtain, rolling shutter or mosquito net are wound when not in use or from which they are unwound when they are being used. Moreover, the internal surface can be provided with ribs 6 to be engaged with mechanical coupling means (not shown) to couple with the gearmotor rotor in accordance with techniques well known in the field.

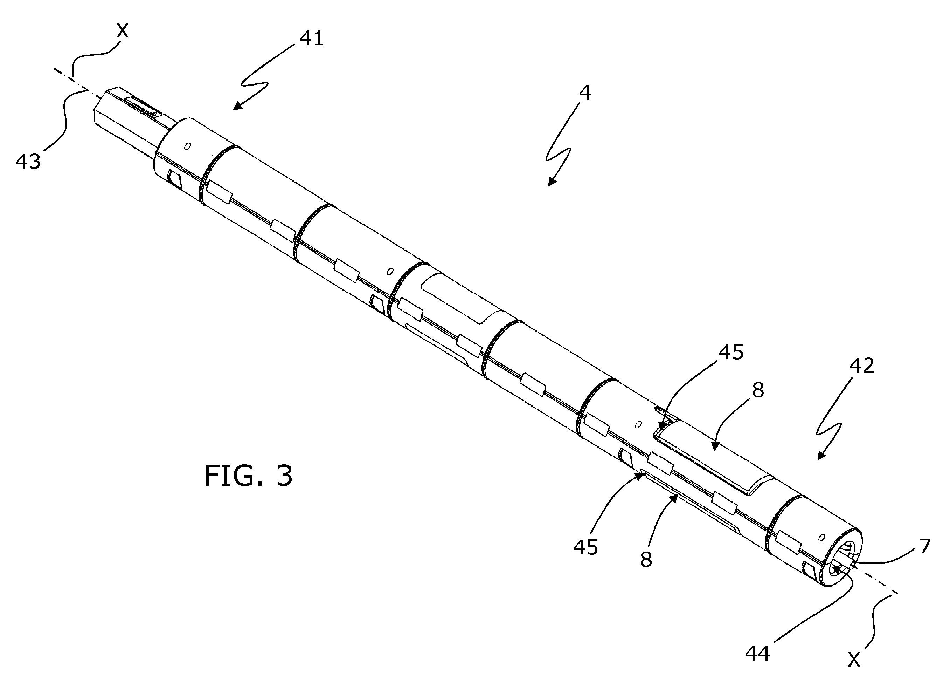

Figure 3 shows the gearmotor housing 4 without the winding tube 5. As can be seen, the housing 4 has generally the shape of a cylindrical tube extending along an axis X-X in common with the gearmotor and is provided with a first end 41 and a second end 42 suitable to connect with corresponding supports (not shown) provided inside the shell 3 so as to fasten the housing of the shell 3 to the device 1. Preferably, the first end 41 includes an extension 43 of hexagonal cross section, while the second end 42 is cylindrical and has a bore 44 with a gearmotor shaft 7 extending from it.

In particular, the second end 42 includes apertures 45 engaged by a gearmotor 8 in such a manner that the external surface of the whole housing 4 is coplanar with the external surface of said gearmotor. In other words, the apertures 45 are like windows closed by the gearmotor 8.

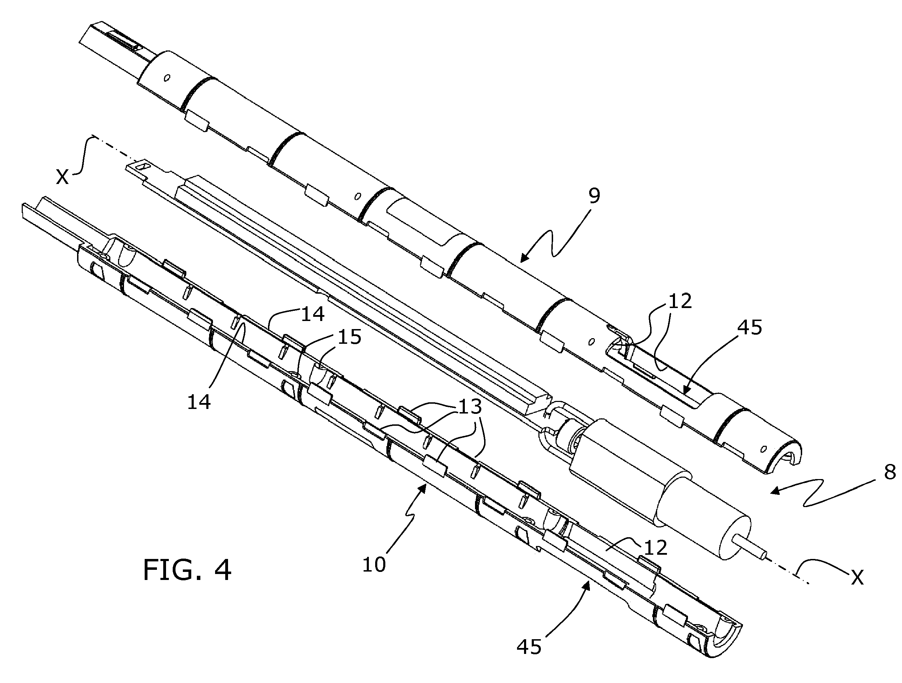

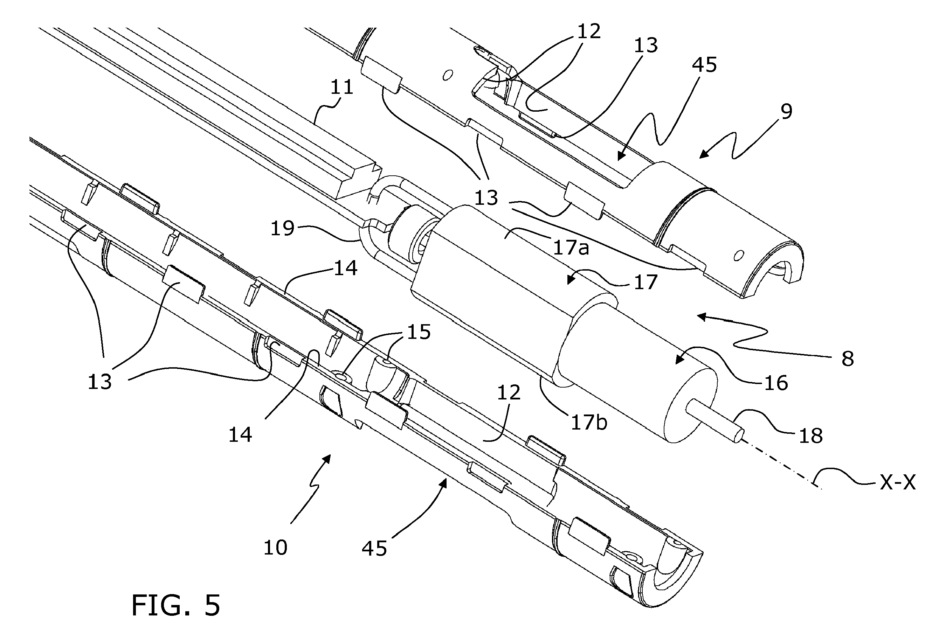

As is better shown in Figures 4 and 5, the housing is advantageously made up of two semi-shells 9 and 10 that enclose a gearmotor 8 and an electronic component 11 for controlling said gearmotor. The two semi-shells 9 and 10 include the above-mentioned apertures 45 positioned at one end 42 of the housing 4. Preferably, there are two such apertures 45, one for each semi-shell. Said apertures are specular to each other with respect to a longitudinal plane passing through the X-X axis of the housing 4.

In particular, the apertures 45 include an internal edge 12 having the function of receiving and centering the gearmotor 8 housed therein and, at the same time, of holding the same in position against both rotational and translational movements along the X-X axis of the housing. In other words, the internal edge 12 functions as restraining means against which the gearmotor 8 abuts and is held to prevent said rotational and translational movements.

Advantageously, the two semi-shells 9 and 10 are, moreover, provided with locking elements 13 suitable to prevent any longitudinal movement of the same. Preferably, said locking elements 13 are represented by a set of teeth formed on one of the two semi-shells and a corresponding set of seats engageable by said teeth and formed on the other semi-shell. In addition, the teeth and their seats are formed along both free longitudinal edges 14 of the semi-shells 9 and 10.

The semi-shells 9 and 10 also include other seats 15 engageable by corresponding fastening elements (not shown) such as, for example, threaded screws for the purpose of fastening the two semi-shells shut once the gearmotor 8 is installed with the electronic components 11.

The housing 4, that is the two semi-shells 9 and 10, is made of any material suitable to contain said components and to support them inside the shell 3. Preferably, the materials used for this purpose are plastic materials conventionally used to enclose electromechanical components or metallic material.

As previously explained, the gearmotor 8 is preferably positioned at one end 42 of said housing in correspondence of said apertures 45 so as to engage them. In Figure 5, the gearmotor 8 includes a rotor 16 equipped with a projecting shaft 7 and a stator 17 positioned around said rotor. Consequently, the stator 17 includes two surfaces 17a and 17b that adapt to engage the apertures 45 of said housing 4 so as to lie coplanarly with the external surface of the respective semi-shells 9 and 10.

The electronic component 11 rests on a plate 20 that is itself integrally connected to the gearmotor 8 through arms 19. Preferably, this component includes conventional low-consumption control devices. In particular, the gearmotor 8 is connected to a printed circuit board through an encoder that makes it possible to maintain a constant operating speed to guarantee a synchronous operation of a plurality of curtains. A suitable setting makes it possible to automatically program the limit switches of the curtain, shutter or mosquito net.

Preferably, the inventive device 1 may also include a control unit (not shown) used to control and operate a plurality of curtains or in the presence of bus controls.

In addition, the device 1 can be provided with a power supply (not shown) or a battery unit rechargeable by a battery charger mounted on said frame 2 and also having the function of button strip to control the gearmotor. This button strip can also be implemented with a radio or infrared reception system for the transmission of electrical control signals to said gearmotor. The signals can be sent through a suitable remote control unit.

In agreement with a particularly preferred embodiment, the device may include a power supply alternative to the electric power supplied by a conventional power grid, such as a panel of photovoltaic cells (not shown).

From what has been thus far explained, it is evident that the problems pointed out in the introductory part of the present description have been resolved and important advantages have been achieved.

Firstly, a considerable reduction of the dimensions of the device 1 was achieved thanks to the arrangement of a housing 4 for the gearmotor provided with apertures suitable to accommodate the outermost portion of said gearmotor. In this manner, it is possible to contain gearmotors of even considerable power, and therefore correspondingly large, thus avoiding the use of underpowered gearmotors with evident operating problems.

Secondly, the edges 12 of each aperture 45 keep the gearmotor 8 in position by effectively countering the translational movements along the X-X axis of the housing 4.

Similarly, the locking elements 12 along both semi-shells 9 and 10 of the housing 4 offer the advantage of preventing the longitudinal translation caused by the torsional effect on the tubular motor during the motor stalling phases.

Further variants of the present system can be implemented by a person skilled in the art without departing from the scope of protection of the present invention as defined by the claims enclosed hereinbelow.

For example, the shapes, the materials, and the electrical, electronic and mechanical components that drive the curtains, shutters or mosquito nets may vary according to requirements or particular preferences.

## Claims

1. Motorized device (1) for controlling curtains, roller shutters or mosquito nets comprising a tubular gearmotor (8) extending along a longitudinal axis (X-X), a housing (4) for said gearmotor, a winding tube (5) upon which a curtain, roller shutter of mosquito net winds or unwinds and a set (11) of electrical/electronic components for the management of the command and control of the gearmotor, **characterized in that** said housing (4) is provided with apertures (45) apt to accommodate said gearmotor (8) so that its external surface is coplanar with the external surface of said housing.

2. Device (1) according to claim 1, wherein said housing (4) comprises two tubular, hollow semi-shells (9, 10) fixable to each other.

3. Device (1) according to claim 2, wherein said semi-shells (9, 10) each comprise one of said apertures (45).

4. Device (1) according to claim 3, wherein said two apertures (45) are specular to each other and positioned in proximity to an end (42) of said housing (4).

5. Device (1) according to any one of claims 1 to 4, wherein said apertures (45) comprise locking means (12) against which said gearmotor (8) abuts and is held in position against any rotational or translational movements with respect to the axis (X-X).

6. Device (1) according to claim 5, wherein said locking means (12) are represented by_an edge apt to receive substantially fit-to-size said gearmotor (8) creating an abutting surface against any longitudinal movements along said axis (X-X).

7. Device (1) according to any one of claim 2 to 5, wherein said semi-shells (9, 10) comprise locking elements (13) against roto-translation movements caused by said gearmotor (8) to the housing (4).

8. Device (1) according to claim 6, wherein said locking elements (13) comprise teeth formed on one of the two semi-shells and a corresponding set of seats engageable by said teeth and formed on the other semi-shell.

9. Device (1) according to claim 8, wherein said teeth and seats are formed along the free edges (14) of said semi-shells (9, 10).

10. Device (1) according to any one of claims 2 to 9, wherein said semi-shells (9, 10) include other seats (15) engageable by corresponding fastening elements to fasten the two semi-shells to each other.

11. Device (1) according to any of claims 1 to 7, wherein said gearmotor (8) comprises a rotor (16) and a stator (17), said stator engaging said apertures (45).

12. Device (1) according to claim 11, wherein said stator (17) comprises two surfaces (17a, 17b) that adapt to engage said apertures (45).

13. Device (1) according to any one of claims 1 to 8, wherein said set of electric/electronic components (11) comprises low energy consumption electronic control devices and an encoder.

14. Device (1) according to any one of claims 1 to 9, further comprising a power supply connected to a supply mains or a battery unit chargeable by a battery charger, if necessary provided with a keyboard to control the gearmotor, and a receiving system for radio or infrared signals sent through a suitable remote control for the transmission of control signals to said gearmotor and/or a power supply consisting of a panel of photovoltaic cells.
